# EUROPEAN PATENT SPECIFICATION

(11) **EP 1 084 611 B1**
(45) Date of publication and mention of the grant of the patent: **29.09.2004**
(21) Application number: 01100040.3
(22) Date of filing: 01.07.1997
(51) Int. Cl.: A01J 5/017, A01K 1/12

(54) **A milking machine for automatically milking animals**
Melkmaschine zum automatischen Melken von Tieren
Machine à traire pour la traite automatique d'animaux

(30) Priority: 05.07.1996 EP 96201881
(43) Date of publication of application: 21.03.2001
(62) Divisional of application: 97929567.2
(73) Proprietor: MAASLAND N.V., 3147 PA Maassluis (NL)
(72) Inventor: Van den Berg, Karel, 2971 BR Bleskensgraaf (NL); Fransen, Renatus Ignatius Josephus, 3135 ZD Vlaardingen (NL)
(74) Representative: Corten, Maurice Jean F.M.

(56) References cited:
- EP-A- 0 689 762
- DATABASE WPI Section PQ, Week 8950 Derwent Publications Ltd., London, GB; Class P13, AN 89-369035 XP002041890 & SU 1 484 333 A (N-CAUC CATTLE RES I), 7 June 1989 (1989-06-07)

## Description

The present invention relates to a milking machine according to the preamble of claim 1.

Such an implement is known, for example from EP-A-0689762.

The invention aims at simplifying the milk unit construction.

In accordance with the invention, for that purpose, the implement described in the preamble comprises the characterising features of claim 1. In accordance with the invention the milk unit is hingeable connected to the implement in such a way, that the milking machine is moveable in about a horizontal direction forwardly and backwardly about one or more hinges extending near the upper part of the animal. In relation to the known implement it will thus be possible to reduce the number of degrees in the robot arm construction by one. Besides the means for moving the entire robot arm construction in the longitudinal direction of the milk box, it will suffice to provide control cylinders for pivoting the robot arm and moving same in height. By performing a pivoting movement from the side of the milk box there will moreover be obtained the advantage that the robot arm can be adjusted into a position enabling to connect, in a reliable manner, the teat cups to teats of the animal that are directed somewhat outwardly.

In accordance with the invention, it is possible to move the robot arm construction in the longitudinal direction of the milk box by providing the robot arm construction with a supporting unit movable along one or more rails in the longitudinal direction of the milk box, relative to which supporting unit the pivotable portion of the robot arm construction is pivotable in sideward direction. In that case the supporting unit may be designed so as to be movable along the rails by means of a motor. The sideward pivoting movement can be achieved by means of a control cylinder which is active between the supporting unit and the pivotable portion of the robot arm construction. By designing the pivotable portion of the robot arm construction as a carrier extending substantially downwardly to which the robot arm is coupled, it is possible to achieve the movability in height of the robot arm. In a particular embodiment, parallel to the control cylinder enabling the movability in height of the robot arm, there may be provided one or more guide rods for counteracting a rotating movement of the robot arm relative to the carrier.

Although the pivotal axis may constitute the centre line of a material axis about which the robot arm is capable of pivoting actually, it is possible to achieve an embodiment of the robot arm construction in which said pivotal axis is a virtual one. According to the invention, the robot arm construction is then provided with a supporting unit movable in the longitudinal direction of the milk box along at least one rail, as well as a quadrangle hinge construction by means of which the pivotable portion of the robot arm construction is pivotable sidewardly relative to the supporting unit.

In order to be able to perform a suitable sideward pivoting movement of the robot arm, the pivotal axis for the robot arm is preferably located approximately in the middle above the milk box. However, in particular when there are provided two milk boxes arranged side by side, it may be desirable to dispose the pivotal axis for the robot arm at the upper sides of the milk boxes or near thereto and between them. In that case it is possible to arrange one robot arm construction for both milk boxes. To that end there may be provided in particular pivoting means for pivoting at least part of the sidewardly pivotable portion of the robot arm construction around the centre line of the downwardly extending portion of the robot arm construction.

Besides two milk boxes arranged side by side in longitudinal direction, there may also be provided several milk boxes arranged behind each other; in that case, the rail for the robot arm construction will extend along these milk boxes or thereabove.

For a better understanding of the invention, reference will now be made to the accompanying drawings, in which:
Figure 1 shows a side view of a robot arm construction;
Figure 2 is a front view of a milk box in which the robot arm construction of Figure 1 is shown schematically;
Figure 3 shows an other embodiment of such a robot arm construction in which the pivotal axis is a virtual one, and
Figure 4 is a front view of two milk boxes between which there is pivotably disposed a robot arm construction.

In the drawings corresponding parts are designated by the same reference numerals.

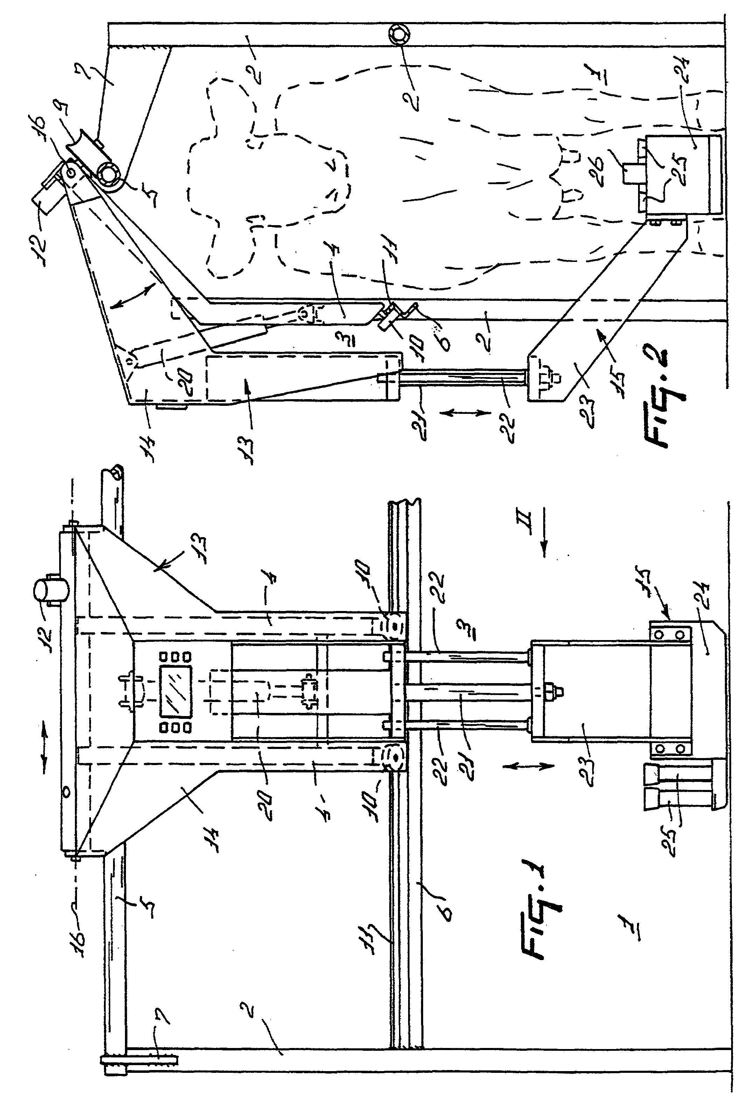

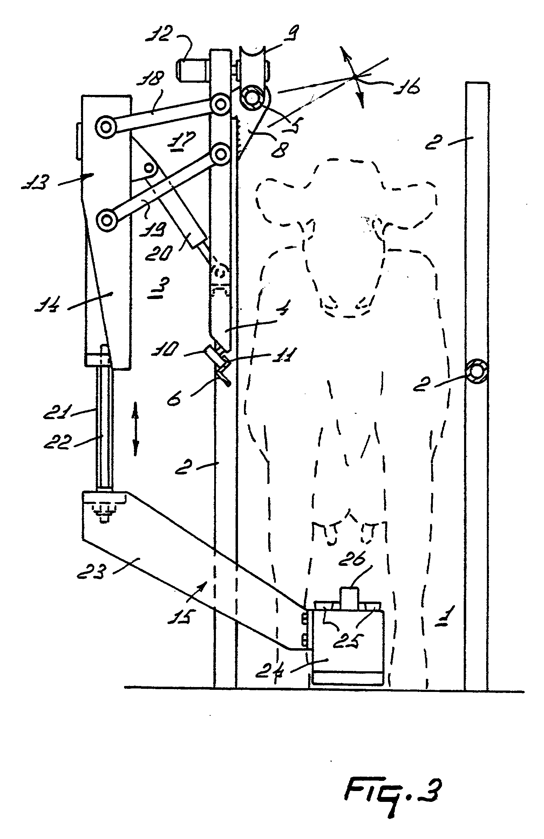

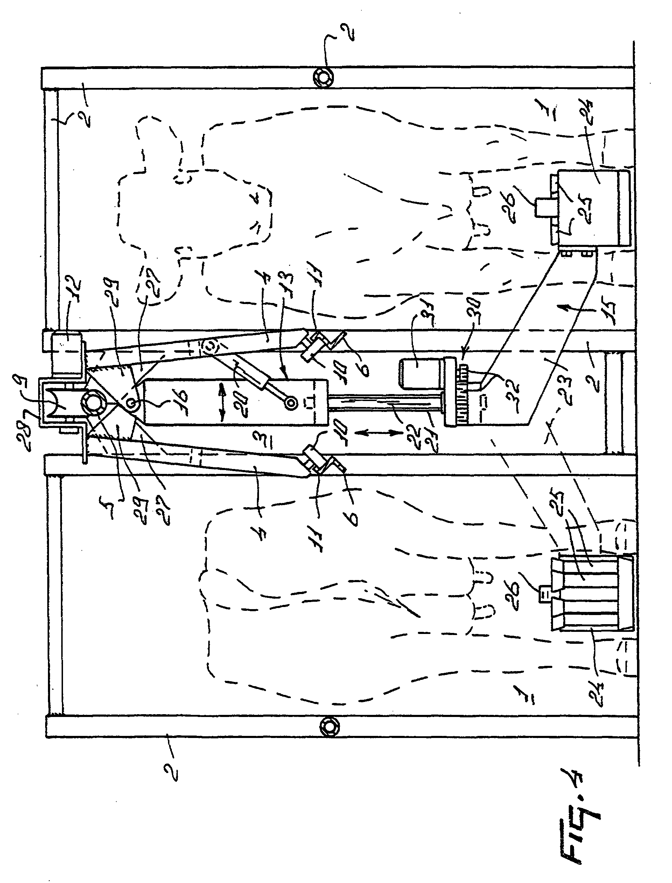

The milk box 1 shown in Figures 1 to 3 accommodates one single animal. Said milk box is surrounded in a customary manner by a fencing 2 and provided with a (non-shown) entrance and exit door. In the milk box and in the immediate vicinity thereof there is provided an automatic milking machine which, besides the usual milking equipment, includes a milking robot for automatically connecting teat cups to the teats of an animal to be milked which is present in the milk box, automatically milking said animal and automatically disconnecting the teat cups from the teats. The milking robot comprises a robot arm construction 3 movable in the longitudinal direction of the milk box 1. Said robot arm construction is provided with a supporting unit 4 which is movable along rails 5 and 6. In Figures 1 and 2, the rail 5 is tubular and disposed in the middle above the milk box 1 in the longitudinal direction thereof by means of supports 7 attached to the fencing 2. In Figure 3, the rail 5 is also tubular but disposed on the side of the upper side of the milk box 1 in the longitudinal direction thereof by means of supports 8 attached to the fencing 2 at the longitudinal side of the milk box where the robot arm construction is located. In all the Figures 1 to 3, the rail 6 is disposed approximately half-way the height of the milk box at the longitudinal side of the fencing 2, i.e. at the side where the robot arm construction is located. The rail 6 is constituted by an angle section whose abutment face over which the supporting unit 4 can be moved is located at an angle of approximately 45° obliquely downwards and outwards relative to the milk box 1. Both at its upper side and its under side the supporting unit 4 is provided with rollers 9 and 10. In Figures 1 and 2, the rollers 9 and 10 are attached to the supporting unit 4 perpendicularly to each other and at an angle of approximately 45° relative to a vertical plane in the longitudinal direction of the milk box, in such a manner that the supporting unit 4 is supported on the rail 5 by means of the rollers 9 and on the rail 6 by means of the rollers 10. In order to prevent the supporting unit 4 from being pushed from the rails 5 and 6, there are provided locking means, e.g. constituted by an upright edge 11 provided on the rail 6 or constituted by additional (non-shown) rollers, also attached to the supporting unit 4 and arranged diametrically opposite the rollers 9 relative to the rail 5, the rail 5 thus extending between the rollers. The supporting unit 4 is capable of being moved along the rails 5 and 6 by means of a motor 12.

The robot arm construction is furthermore provided with a sidewardly pivotable portion 13 comprising a carrier 14 extending substantially downwardly and a robot arm 15 attached thereto. The sidewardly pivotable portion 13 and consequently also the robot arm 15 are pivotable about a substantially horizontal pivotal axis 16 which is located at the upper side of the milk box or near thereto in the longitudinal direction thereof. Although, in Figures 1 and 2 as well as in Figure 3 the pivotal axis 16 is located approximately in the middle above the milk box, in Figures 1 and 2 said pivotal axis constitutes the centre line of the material pivotal axis for the sidewardly pivotable portion 13, while in Figure 3 said pivotal axis is a virtual one which, moreover, during the pivoting movement of the sidewardly pivotable portion 13, moves upwardly. In Figures 1 and 2, the pivotal axis 16 and the centre line of the rail 5 are located in a substantially vertical plane. In Figure 3, the sidewardly pivotable portion 13 is connected with the supporting unit 4 by means of a quadrangle hinge construction 17, composed of arms 18 and 19, the distance between the hinge points of said arms on the carrier 14 being larger than the distance between the hinge points of these arms on the supporting unit 4.

As described so far, the sideward pivoting movement of the portion 13 is achieved by means of a control cylinder 20 which is disposed between said pivotable portion 13 and the supporting unit 4. As already mentioned, the sidewardly pivotable portion 13 comprises the carrier 14 and the robot arm 15. The robot arm 15 is connected movably in height with the carrier 14 by means of a control cylinder 21. Parallel to this control cylinder 21 there are provided one or more guide rods 22 for counteracting a rotating movement of the robot arm 15 about an axis in the longitudinal direction of the control cylinder 21 relative to the carrier 14.

The robot arm 15 comprises a portion 23 extending obliquely downwards in the direction of the milk box and a portion 24 extending horizontally. The latter portion 24 may be produced as the end piece of the robot arm construction as described in EP-A-O 360 354 or in EP-A-O 519 544, the description of this end piece as well as its function being considered to be inserted here. Said end piece is adapted to serve as a carrier for the teat cups 25 and for the detector 26 by means of which the position of the teats can be determined.

In order to make it possible for an animal to enter the milk box 1 without damaging the milking robot, the sidewardly pivotable portion 13 of the robot arm construction is pivotable outwardly to such an extent that the robot arm 15 is located almost entirely outside the milk box 1. When an animal is present in the milk box and the teat cups 25 have to be connected, the robot arm construction 3 has first to be moved by means of the motor 12 in the longitudinal direction of the milk box to such an extent, i.e. into a position in which the robot arm 15 has pivoted entirely or almost entirely outside the milk box, that, by means of the control cylinder 20, the robot arm 15 can be pivoted under the animal into a position in which the detector 26 is capable of determining the position of the teats. By subsequently operating the motor 12 and the control cylinders 20 and 21, it will be possible to connect the teat cups 25 to the teats. After milking, the teat cups may be disconnected from the teats in the way described in the aforementioned EP-A-O 360 354. When adjusting a teat cup into the right position for connecting same to a relevant teat, the pivotability of the robot arm 15 about the pivotal axis 16 may be of great advantage when the teats of the animal are directed somewhat outwardly; a situation which occurs in particular when relatively much time has elapsed since the previous milking run.

Figure 4 shows a construction in which there are provided two milk boxes arranged side by side, while the robot arm construction 3 is located in the space between the two milk boxes. The upper rail 5 along which the robot arm construction 3 is movable in the longitudinal direction of the milk boxes is attached by means of supports 27 to the fencing 2 of the two milk boxes, more in particular in the middle between said milk boxes. In this case the supporting unit 4 is composed of two portions which are connected to each other by means of a connecting element 28 in which the rollers 9 are bearing-supported. By means of the rollers 9 the two portions of the supporting unit 4 bear on the rail 5. Each of the two portions of the supporting unit 4 is provided at its lower side with rollers 10, while each of the portions of the supporting unit 4 is supported in the same manner as shown in Figures 1 to 3. The pivotable portion 13 is capable of pivoting sidewardly to a limited extent towards both milk boxes by means of the control cylinder 20 which, also in this case, is disposed between said sidewardly pivotable portion 13 and the supporting unit 4. The pivotal axis 16 is then located under the rail 5. The carrier 14 is pivotable, about the pivotal axis 16 relative to the supporting unit 4 by means of supports 29 attached to said supporting unit 4, at the ends of which supports 29 the material pivotal axis extends; also in this case the pivotal axis 16 constitutes the centre line of the material pivotal axis. In Figure 4, the robot arm 15 is indeed connected movably in height with the carrier 14 by means of the control cylinder 21, but in this case the robot arm is also rotatable around the centre line of said control cylinder with the aid of pivoting means 30. In this case, the pivoting means 30 are constituted by a motor 31 and transmission means, such as gear wheels 32. When moving the robot arm construction in the longitudinal direction of the milk boxes, it is difficult to pivot the robot arm 15 sidewardly outside the two milk boxes, unless the space between the two milk boxes is relatively large. A rotative construction in which the robot arm 15 can be adjusted into an intermediate position, i.e. a position in which the portion 23 of the robot arm extends in the space between the two milk boxes, and into an operative position in the two milk boxes, offers the possibility to use one and the same robot arm construction 3 for both milk boxes and to keep the space between the milk boxes relatively small. However, because of the construction of the horizontal portion 24 of the robot arm 15, the two milk boxes have to be entered in opposite directions. The use of two milk boxes in the manner as described with reference to Figure 4 enables to milk an animal in one milk box, while in the other milk box the teats of the animal are already cleaned so that, when the milking of an animal in one milk box has finished, the milking of the animal in the other milk box can start immediately.

Instead of arranging two milk boxes side by side, it is also possible to arrange two or more milk boxes behind each other. In that situation, the entrance and the exit of the milk boxes have to be disposed at the longitudinal side facing the one where the robot arm construction is located. In that case, the rails 5 and 6 for the robot arm construction 3 have to extend along all these milk boxes or thereabove, so that the robot arm construction can be moved along one and the same rail from a position at the side of a milk box located therebehind or in front thereof into an other position at the side of an other milk box located therebehind or in front thereof. It is also possible to arrange the milk boxes in a circle or in a carrousel. In that situation, the rails 5 and 6 along which the robot arm construction is then movable have to extend along the circle or carrousel or thereabove.

Finally it is noticed that the milking robot comprises a computer for controlling the automatic connection of the teat cups, the automatic milking of the animals and the automatic disconnection of the teat cups after milking. In particular the above-described possibilities of movement of the robot arm 15 of the robot arm construction 3 are under control of the computer; in other words, the motors 12 and 31 and the control cylinders 20 and 21 are computer-controlled.

## Claims

1. A milking machine for the automatically milking of animals, such as cows comprising a milking robot with a robot arm construction (3) and a milk unit for the automatically connecting of the teat cups (25) of the machine to the teats of the cow, said milk units being arranged in a carrousel, **characterized in that** at least one rail (5, 6) is extending in a complete circle along the carrousel or thereabove, along which rail (5, 6) the robot arm construction (3) is movable.

2. A machine according to claim 1, **characterized in that** the milk unit is hingeable connected to the implement in such a way, that the milking machine is moveable in about a horizontal direction forwardly and backwardly about one or more hinges (16, 17) extending near the upper part of the animal.

3. A machine as claimed in claim 2, **characterized in that** the robot arm construction (3) is provided with a supporting unit (4) movable along at one or more rail constructions (5, 6) in the longitudinal direction of the milk box (1), whereby the supporting unit (4) is pivotable.

4. A machine as claimed in claim 3, **characterized in that** there are provided at least two rail construction (5, 6).

5. A machine as claimed in claim 3 or 4, **characterized in that** the supporting unit (4) is movable along two rails (5, 6) disposed at different heights on the fencing (2) of the milk box (1).

6. A machine as claimed in any one of the preceding claims, **characterized in that** the sidewardly pivotable portion (13) of the robot arm construction (3) is capable of pivoting in sideward direction relative to the milk box (1) by means of a control cylinder (20) disposed between said pivotable portion (13) and the supporting unit (4).

7. A machine as claimed in any one of the preceding claims, **characterized in that** the robot arm construction (3) comprises a carrier (14) for the robot arm (15), which carrier (14) is pivotable about the pivotal axis (16) and extends substantially downwardly.

8. A machine as claimed in claim 7, **characterized in that** the robot arm (15) is connected movably in height with the carrier (14).

9. A machine as claimed in any one of the preceding claims, **characterized in that** the sidewardly pivotable portion (13) of the robot arm construction (3) is pivotable outwardly to such an extent that the robot arm (15) is located almost entirely outside the milk box (1).

10. A machine as claimed in any one of the preceding claims, **characterized in that** the pivotal axis (16) for the robot arm (15) is located approximately in the middle above the milk box (1).

## Patentansprüche

1. Melkmaschine zum automatischen Melken von Tieren, wie z. B. Kühen, die einen Melkroboter mit einer Roboterarm-Konstruktion (3) und eine Melkeinheit zum automatischen Anschließen der Zitzenbecher (25) der Maschine an die Zitzen der Kuh umfaßt, wobei die Melkeinheiten in einem Karussell angeordnet sind,
**dadurch gekennzeichnet, daß** sich mindestens eine Schiene (5, 6) in einem vollständigen Kreis entlang des Karussells oder über diesem erstreckt, wobei die Roboterarm-Konstruktion (3) entlang der Schiene (5, 6) bewegbar ist.

2. Maschine nach Anspruch 1,
**dadurch gekennzeichnet, daß** die Melkeinheit mit der Vorrichtung in der Weise gelenkig verbunden ist, daß die Melkmaschine in etwa horizontaler Richtung um ein oder mehrere Gelenke (16, 17), die nahe dem oberen Teil des Tieres angeordnet sind, nach vorn und hinten bewegbar ist.

3. Maschine nach Anspruch 2,
**dadurch gekennzeichnet, daß** die Roboterarm-Konstruktion (3) mit einer Trageinheit (4) versehen ist, die auf einer oder mehreren Schienenkonstruktionen (5, 6) in Längsrichtung der Melkbox (1) bewegbar ist, wobei die Trageinheit (4) schwenkbar ist.

4. Maschine nach Anspruch 3,
**dadurch gekennzeichnet, daß** mindestens zwei Schienenkonstruktionen (5, 6) vorgesehen sind.

5. Maschine nach Anspruch 3 oder 4,
**dadurch gekennzeichnet, daß** die Trageinheit (4) auf zwei Schienen (5, 6) bewegbar ist, die in unterschiedlicher Höhe an der Einfassung (2) der Melkbox (1) angebracht sind.

6. Maschine nach einem der vorhergehenden Ansprüche,
**dadurch gekennzeichnet, daß** der seitwärts schwenkbare Abschnitt (13) der Roboterarm-Konstruktion (3) in seitlicher Richtung relativ zu der Melkbox (1) mit Hilfe eines Steuerzylinders (20) geschwenkt werden kann, der zwischen dem schwenkbaren Abschnitt (13) und der Trageinheit (4) angeordnet ist.

7. Maschine nach einem der vorhergehenden Ansprüche,
**dadurch gekennzeichnet, daß** die Roboterarm-Konstruktion (3) einen Träger (14) für den Roboterarm (15) umfaßt, wobei der Träger (14) um die Schwenkachse (16) schwenkbar ist und sich im wesentlichen nach unten erstreckt.

8. Maschine nach Anspruch 7,
**dadurch gekennzeichnet, daß** der Roboterarm (15) höhenbewegbar mit dem Träger (14) verbunden ist.

9. Maschine nach einem der vorhergehenden Ansprüche,
**dadurch gekennzeichnet, daß** der seitwärts schwenkbare Abschnitt (13) der Roboterarm-Konstruktion (3) so weit nach außen geschwenkt werden kann, daß der Roboterarm (15) nahezu vollständig außerhalb der Melkbox (1) angeordnet ist.

10. Maschine nach einem der vorhergehenden Ansprüche,
**dadurch gekennzeichnet, daß** die Schwenkachse (16) für den Roboterarm (15) etwa in der Mitte über der Melkbox (1) angeordnet ist.

## Revendications

1. Machine à traire pour la traite automatique d'animaux, tels que des vaches, comprenant un robot trayeur avec une construction de bras de robot (3) et une unité de traite pour la connexion automatique des gobelets trayeurs (25) de la machine aux trayons de la vache, lesdites unités de traite étant agencées en carrousel, **caractérisée en ce qu'**au moins un rail (5, 6) s'étend en formant un cercle complet le long du carrousel ou au-dessus, rail (5, 6) le long duquel la construction de bras de robot (3) peut se déplacer.

2. Machine selon la revendication 1, **caractérisée en ce que** l'unité de traite est reliée de manière articulée au dispositif de façon à ce que la machine à traire puisse se déplacer dans une direction approximativement horizontale vers l'avant et vers l'arrière, environ une ou plusieurs charnières (16, 17) s'étendant près de la partie supérieure de l'animal.

3. Machine selon la revendication 2, **caractérisée en ce que** la construction de bras de robot (3) est dotée d'une unité de support (4) mobile le long d'une ou de plusieurs constructions de rail (5, 6) dans la direction longitudinale du box de traite (1), de telle manière que l'unité de support (4) puisse pivoter.

4. Machine selon la revendication 3, **caractérisée en ce qu'**il est prévu au moins deux constructions de rail (5, 6).

5. Machine selon la revendication 3 ou 4, **caractérisée en ce que** l'unité de support (4) peut se déplacer le long de deux rails (5, 6) disposés à différentes hauteurs sur la clôture (2) du box de traite (1).

6. Machine selon l'une quelconque des revendications précédentes, **caractérisée en ce que** la partie pouvant pivoter latéralement (13) de la construction de bras de robot (3) est capable de pivoter dans une direction latérale par rapport au box de traite (1) au moyen d'un cylindre de commande (20) disposé entre ladite partie pouvant pivoter (13) et l'unité de support (4).

7. Machine selon l'une quelconque des revendications précédentes, **caractérisée en ce que** la construction de bras de robot (3) comprend un support (14) pour le bras de robot (15), lequel support (14) peut pivoter autour de l'axe de pivot (16) et s'étend sensiblement vers le bas.

8. Machine selon la revendication 7, **caractérisée en ce que** le bras de robot (15) est relié de manière mobile en hauteur avec le support (14).

9. Machine selon l'une quelconque des revendications précédentes, **caractérisée en ce que** la partie pouvant pivoter latéralement (13) de la construction de bras de robot (3) peut pivoter vers l'extérieur jusqu'à un degré tel que le bras de robot (15) soit situé presque entièrement en dehors du box de traite (1).

10. Machine selon l'une quelconque des revendications précédentes, **caractérisée en ce que** l'axe de pivot (16) pour le bras de robot (15) est situé approximativement au milieu au-dessus du box de traite (1).
